# EUROPEAN PATENT SPECIFICATION

(11) **EP 3 748 392 B1**
(45) Date of publication and mention of the grant of the patent: **22.10.2025**
(21) Application number: 19177910.7
(22) Date of filing: 03.06.2019
(51) Int. Cl.: G01S 7/41, G01S 13/42, G01S 13/931

(54) **SYSTEM AND METHOD TO CLASSIFY OBJECTS USING RADAR DATA**
SYSTEM UND VERFAHREN ZUR KLASSIFIZIERUNG VON OBJEKTEN UNTER VERWENDUNG VON RADARDATEN
SYSTÈME ET PROCÉDÉ POUR CLASSER DES OBJETS À L'AIDE DE DONNÉES RADAR

(43) Date of publication of application: 09.12.2020
(73) Proprietor: NXP USA, Inc., Austin TX 78735 (US)
(72) Inventor: Saad Nawaz, Muhammad, 31023 Toulouse cedex 1 (FR)
(74) Representative: Hardingham, Christopher Mark

(56) References cited:
- EP-A1- 1 121 608
- CN-A- 107 993 215
- US-A1- 2017 262 735
- KAIMING HE ET AL: "Deep Residual Learning for Image Recognition", 2016 IEEE CONFERENCE ON COMPUTER VISION AND PATTERN RECOGNITION (CVPR), 1 June 2016 (2016-06-01), pages 770 - 778, XP055536240, ISBN: 978-1-4673-8851-1, DOI: 10.1109/CVPR.2016.90

## Description

### FIELD OF THE INVENTION

The present specification relates to a system operable to classify objects using radar data obtained by an automotive radar. The present specification also relates to a hardware accelerator or graphics processing unit comprising the system. The present specification further relates to a vehicle comprising the hardware accelerator or the graphics processing unit. The present specification also relates to a method of classifying objects using radar data obtained by an automotive radar.

### BACKGROUND

With the advancements in automotive radars over the years, the applications have gone beyond mere detection of objects. Imaging radars are now capable of reflecting several points from targets. However, the processing capability of automotive radar sensors (in terms of classification) is lacking behind.

CN 107993215 A describes a weather radar image processing method and a weather radar image processing system. The method includes receiving echo images of a weather radar, inputting the echo images into a full-convolution neural network, classifying pixel points of the echo images, and acquiring predicated images of the pixel points marked with true echoes, wherein the full-convolution neural network comprises a deconvolution layer and a softmax layer.

KAIMING HE ET AL: "Deep Residual Learning for Image Recognition", 2016 IEEE CONFERENCE ON COMPUTER VISION AND PATTERN RECOGNITION (CVPR), 1 June 2016, pages 770-778 describes a residual learning framework to ease the training of networks that are substantially deeper than those used previously. Layers are reformulated as learning residual functions with reference to the layer inputs, instead of learning unreferenced functions.

EP 1 121 608 A1 describes a neural network radar processor that comprises a multilayer perceptron neural network comprising an input layer, a second layer, and at least a third layer, wherein each layer has a plurality of nodes, and respective subsets of nodes of the second and third layers are interconnected so as to form mutually exclusive subnetworks. In-phase and quadrature phase time series from a sampled down-converted FMCW radar signal are applied to the input layer, and the neural network is trained so that the nodes of the output layer are responsive to targets in corresponding range cells, and different subnetworks are responsive to respectively different non-overlapping sets of target ranges. The neural network is trained with signals that are germane to an FMCW radar, including a wide range of target scenarios as well as leakage signals, DC bias signals, and background clutter signals.

US 2017/262735 A1 describes a source deconvolutional network that is adaptively trained to perform semantic segmentation. Image data is then input to the source deconvolutional network and outputs of the S-Net are measured. The same image data and the measured outputs of the source deconvolutional network are then used to train a target deconvolutional network. The target deconvolutional network is defined by a substantially fewer numerical parameters than the source deconvolutional network.

### SUMMARY

The invention is defined in the accompanying independent and dependent claims.

According to the invention, there is provided a system operable to classify objects using radar data obtained by an automotive radar, the system comprising:
a convolutional network comprising:
   an input for receiving the radar data;
   a plurality of hidden layers comprising convolution layers for extracting features from the radar data;
   and an output;
a bus coupled to the output of the convolutional network;
a deconvolutional network comprising:
   an input coupled to the bus to receive the output of the convolutional network,
   a plurality of hidden layers comprising deconvolution layers for classifying the features extracted from the radar data by the convolutional network; and
   a classification output;
a filter having an input coupled to the classification output of the deconvolutional network;
a fully connected network comprising:
   an input coupled to the bus for receiving the output of the convolutional network;
   a plurality of fully connected layers for determining a clutter threshold value from the output of the convolutional network; and
   an output connected to the filter to provide the clutter threshold value to the filter; and
an output coupled to the filter,
wherein the filter is operable to use the clutter threshold value to filter noise and/or clutter from the classification output of the deconvolutional network and pass a filtered classification output to the output of the system.

According to the invention, there is provided a method of classifying objects using radar data obtained by an automotive radar, the method comprising:
a convolutional network:
   receiving the radar data; and
   using a plurality of hidden layers comprising convolution layers to extract features from the radar data;
a deconvolutional network:
   receiving an output of the convolutional network;
   using a plurality of hidden layers comprising deconvolution layers to classify the features extracted from the radar data by the convolutional network; and
   providing a classification output;
a fully connected network:
   receiving the output of the convolutional network; and
   using a plurality of fully connected layers to determine a clutter threshold value from the output of the convolutional network; and
a filter using the clutter threshold value to filter noise and/or clutter from the classification output of the deconvolutional network to produce a filtered classification output.

The claimed system and method may improve the accuracy and consistency by which objects detected by a radar system can be classified. This may be achieved due to the provision of the filter, which filters out noise and/or clutter based on the clutter threshold value produced by the fully connected network, to produce the filtered classification output.

The system of may further comprise a skip connections bus having one or more skip connections coupleable between the convolutional network and the deconvolutional network. This can allow some of the convolution layers and deconvolution layers to be bypassed. This can allow the fast/efficient classification of objects to be achieved.

Each skip connection may allow high-level extracted features learned during early convolution layers of the convolutional network to be passed directly to the deconvolutional network.

The system may be operable selectively to couple/decouple a skip connection between a convolution layer and a deconvolution layer.

The filter may be operable to filter out any detected features having a value less than the clutter threshold value.

The value of each detected feature may comprise a radar cross section value.

The clutter threshold value may be a single value.

The system may comprise a controller for controlling at least one of: a stride size; a padding size; and a dropout ratio, for each layer in the convolutional and/or deconvolutional network.

The radar data may comprise at least one of range, doppler and spatial information.

The filtered classification output may classify objects detected by the automotive radar. Examples of such objects include vehicles, street furniture, building and pedestrians.

The system and method described herein may use various activation functions of the kind that are known in the art of neural networks. For instance, the activation function may be a linear activation function, a step activation function, a hyperbolic tangent activation function of a Rectified Linear (ReLu) activation function. The clutter threshold value may be calculated in accordance with the activation function.

The method may comprise selectively coupling a skip connection between the convolutional network and the deconvolutional network for bypassing some of the convolution layers and deconvolution layers.

Further, there is provided a hardware accelerator comprising the system according to the invention, a graphics processing unit comprising the system according to the invention and a vehicle comprising the hardware accelerator.

### BRIEF DESCRIPTION OF THE DRAWINGS

Embodiments of this disclosure will be described hereinafter, by way of example only, with reference to the accompanying drawings in which like reference signs relate to like elements and in which:
Figure 1 shows a system comprising a neural network architecture according to an embodiment of this disclosure;
Figure 2A shows the convolutional network of the neural network architecture of Figure 1 in more detail, according to an embodiment of this disclosure;
Figure 2B shows the fully connected network of the neural network architecture of Figure 1 in more detail, according to an embodiment of this disclosure;
Figure 2C shows the deconvolutional network of the neural network architecture of Figure 1 in more detail, according to an embodiment of this disclosure;
Figure 2D shows the filter of the neural network architecture of Figure 1 in more detail, according to an embodiment of this disclosure;
Figure 3 compares the dimensions of the input and output of the neural network architecture of Figure 1 according to an embodiment of this disclosure; and
Figure 4 shows a ReLu activation function and clutter threshold value according to an embodiment of this disclosure.

### DETAILED DESCRIPTION

Embodiments of this disclosure are described in the following with reference to the accompanying drawings.

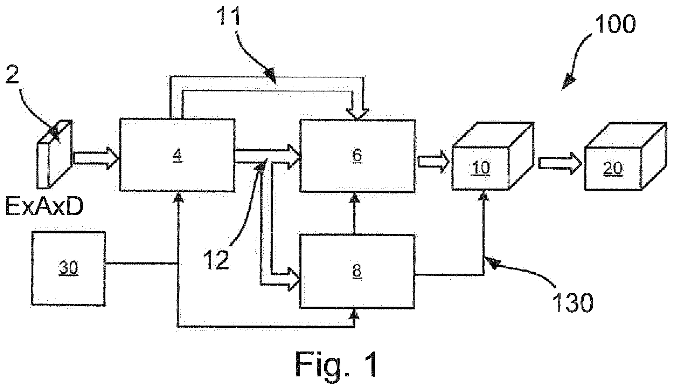

Figure 1 shows a system 100 comprising a neural network architecture according to an embodiment of this disclosure. The system 100 is operable to classify objects using radar data. The radar data is typically radar data that has been acquired by a vehicle radar. Accordingly, examples of objects to be classified include vehicles, street furniture, building and pedestrians. The radar data may, for instance, comprise range, doppler and spatial information.

The system 100 includes a convolutional network 4. The convolutional network 4 includes an input that for receiving the radar data. The convolutional network 4 comprises a set of hidden layers. The hidden layers may include convolution layers and/or subsampling layers. The hidden layers are operable to extract features from the radar data received at the input. The convolutional network 4 further includes an output.

The radar data may be in the form of an input matrix 2 comprising a plurality of radar data values. In one embodiment, the dimensions of the input matrix 2 may be ExAxD, where E is the number of elevation points, A is the number of azimuth points and D is the number of distance points in the input matrix 2. V and RCS may be the channels of the input matrix 2, where V is the number of velocity points and RCS is the radar cross section.

The system 100 also includes a bus 12. The bus 12 is coupled to the output of the convolutional network 4, for providing the output of the convolutional network 4 (processed radar data in which extracted features have been identified by the convolutional network) to other parts of the system 100.

The system 100 further includes a deconvolutional network 6. The deconvolutional network 6 includes an input, which is connected to the bus 12 for receiving the output of the convolutional network 4. The deconvolutional network 6 also includes a plurality of hidden layers. The hidden layers include deconvolution layers for classifying the features extracted from the radar data 2 by the convolutional network 4. The deconvolutional network 6 also includes a classification output, from which processed radar data in which the extracted features identified by the convolutional network 4 are classified.

The system 100 also includes a filter 10. The filter 10 has an input, which is coupled to the classification output of the deconvolutional network 6. The filter may comprise a filter layer located after a final one of the deconvolution layers in the sequence of deconvolution layers in the deconvolutional network 6.

The system 100 further includes a fully connected network 8. The fully connected network 8 has an input which is coupled to the bus 12 for receiving the output of the convolutional network 4. The fully connected network 8 also includes a plurality of fully connected layers. The fully connected layers are operable to determine a clutter threshold value from the output of the convolutional network 6. The fully connected network 8 further includes an output, which is connected to the filter 10 (e.g. by connection 130) to provide the clutter threshold value to the filter 10.

The neural network architecture of the system 100 of Figure 1 may use various activation functions of the kind that are known in the art of neural networks. For instance, the activation function may be a linear activation function, a step activation function, a hyperbolic tangent activation function of a Rectified Linear (ReLu) activation function. The clutter threshold value may be calculated in accordance with the activation function.

The filter 10 is operable to use the clutter threshold value provided by the fully connected network 8 to filter noise and/or clutter from the classification output of the deconvolutional network 6. The filter 10 thereby produces a filtered classification output, which is then passed to the output 20 of the system.

The system 100 may also include a skip connections bus 11. The skip connections bus 11 includes one or more skip connections. The skip connections may be selectively coupleable between the convolutional network 4 and the deconvolutional network 6. In particular, and noting that the convolution layers of a convolutional network and the deconvolution layers of the deconvolutional network are typically provided in a linear sequence, the skip connections may be selectively coupleable between a convolution layer of the convolutional network 4 and a deconvolution layer of the deconvolutional network 6, so as to bypass any intervening convolution layers and deconvolution layers in the sequence. It is envisaged that the skip connections bus 11 may include skip connections for selectively coupling any convolution layer of the convolutional network 4 with any deconvolution layer of the deconvolutional network 6, to allow intervening layers to be bypassed in this way. Typically, however during one object classification operation, only one convolution layer would be connected to any one deconvolution layer.

The skip connections of the skip connections bus 11 can allow high-level extracted features that are learned during early convolution layers in the sequence of convolution layers of the convolutional network 4 to be passed directly to the deconvolutional network 6. Data can be fed from an early convolution layer of the convolutional network 4 (in addition to from the end of sequence of convolution layers outputted from the convolutional network 4), into a deconvolution layer of the deconvolutional network 6, thereby to retain high-level features (for instance the contours of an object) learned during early convolution layers of the convolutional network 4. This may significantly increase the speed and efficiency by which objects may be classified by the system 100.

The system 100 may further include a controller 30. The controller 30 may be operable control certain operational parameters of the system 100, including, for instance, a stride size, a padding size and a dropout ratio for the (layers in the) convolutional network 4, the deconvolutional network 6 and/or the fully connected network 8 of the neural network architecture. The controller 30 may also be operable to control the skip connections bus 11, for selectively coupling (and decoupling) the skip connections of the bus 11 between the between the convolution layers of the convolutional network 4 and the deconvolution layers of the deconvolutional network 6 as noted above.

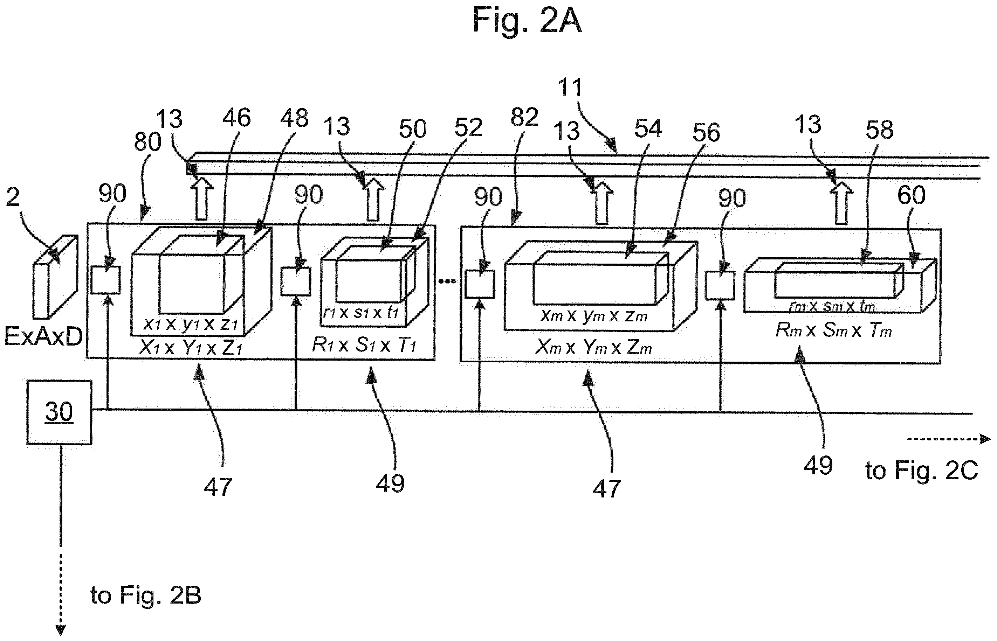

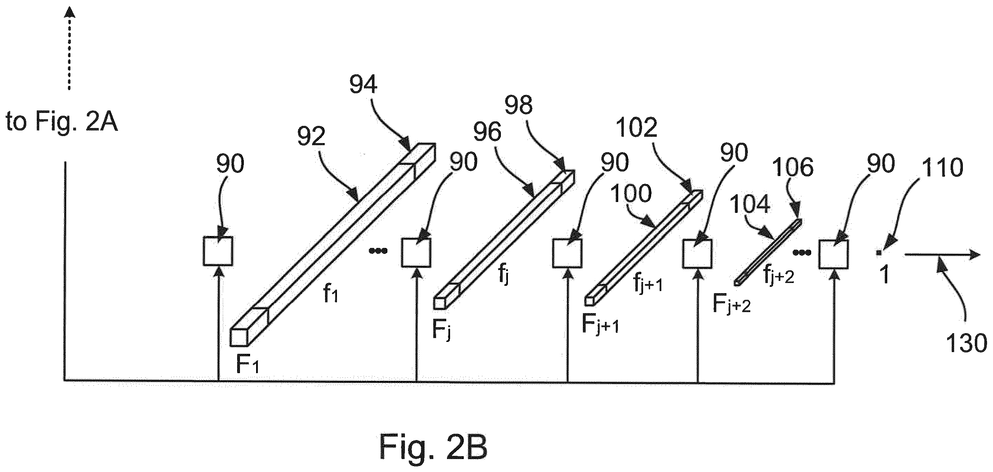

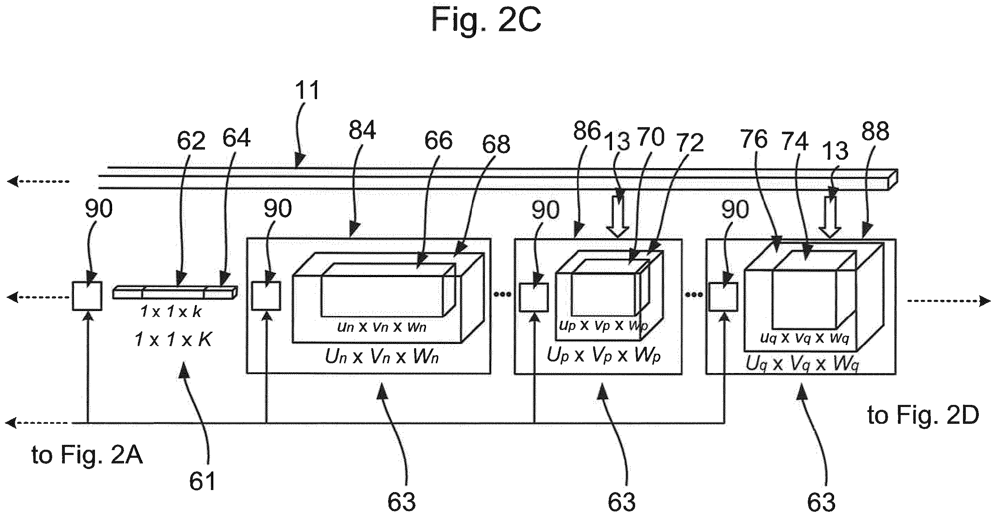

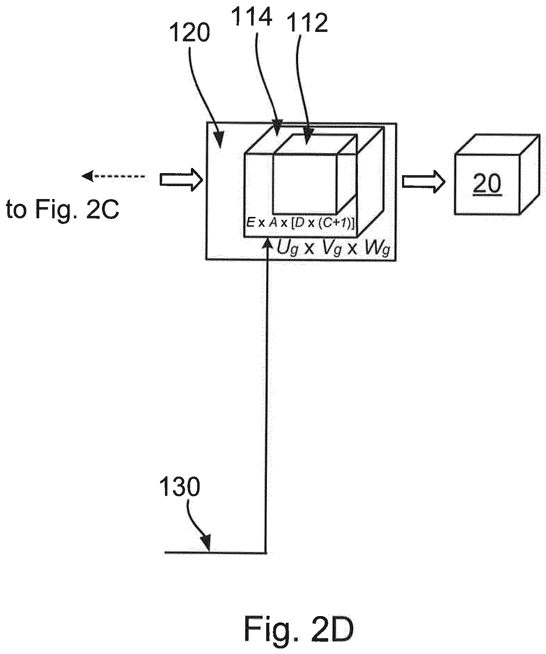

Figure 2 shows the system 100 of Figure 1 in more detail. In particular, Figure 2A shows further details of the convolutional network 4, Figure 2B shows further details of the fully connected network 8, Figure 2C shows further details of the deconvolutional network 6 and Figure 2D shows further details of the filter 10.

The convolutional network 4 (Figure 2A) includes an input for receiving the radar data, which as noted above may be in the form of an input matrix 2. Again, in this embodiment, the input matrix has dimensions ExAxD.

The convolutional network 4 also includes a plurality of hidden layers 80, 82. The hidden layers 80, 82 may be arranged in a linear sequence. The convolutional network 4 may in principal include any number of hidden layers - for clarity only the first hidden layer 80 and the m^{th} hidden layer 82 are shown in Figure 2A. The hidden layers 80, 82 each include a convolution layer 47. The convolution layers 47 of the hidden layers 80, 82 are operable to extract features from the radar data for subsequent classification by the deconvolutional network 6.

Each convolution layer 47 may comprise a perceptron cube 48, 56. The perceptron cubes 48, 56 shown in the figures outlines the envelope of available perceptrons that may be supported by the system 100. On the other hand, the cubes 46, 54 shown in the figures illustrate the perceptrons that may be employed by a given application, depending on the dimensions of the input matrix 2.

Each hidden layer 80, 82 may also include a subsampling layer 49. Each subsampling layer 49 may comprise a perceptron cube 52, 60. Again, the perceptron cubes 52, 60 shown in the figures outlines the envelope of available perceptrons that may be supported by the system 100. On the other hand, the cubes 50, 58 shown in the figures illustrate the perceptrons that may be employed by a given application, again depending on the dimensions of the input matrix 2.

The subsampling layer 49 in each hidden layer 80, 82 may be connected to the preceding convolution layer 47 by a layer connector fabric 90. Similarly, each convolution layer 47 in each hidden layer 80, 82 may be connected to the (e.g. subsampling layer 49 of the) preceding hidden layer by a layer connector fabric 90. Note that the layer connector fabric 90 of the first hidden layer 80 connects the first convolution layer 47 to the input of the convolutional network to receive the input matrix 2.

In the figures, *x, y, z, s, t* and w are all programmable parameters and can be supported up to maximum of X, Y, Z, R, S and T respectively. Note that X, Y and Z are used as symbols for dimensions of convolution layers 47 while R, S and T are used for dimensions of subsampling layers 49.

For the purposes of the present application, the term perceptron cube is not limited to a cubic arrangement of perceptrons, and it will be understood that the dimensions of each perceptron cube may not be equal to each other. Each perceptron cube may by implemented as one or more hardware layers.

The convolutional network 4 also includes an output located at the end of the sequence of hidden layers 80, 82. In the present embodiment the output may be considered to be the output of the m^{th} hidden layer (e.g. the output of the subsampling layer 49 of the hidden layer 82).

Figure 2A also shows the skip connections bus 11. The arrows 13 schematically show the connections between the skip connections bus 11 and the various layers of the convolutional network 4.

Figure 2A further shows the controller 30. The controller may be connected to each layer connector fabric 90 in the system 100 (see also the layer connector fabrics 90 in Figures 2B and 2C to be described below. This can allow the controller 30 to control parameters such as the stride size, padding size and dropout ratio for the (layers in the) convolutional network 4, the deconvolutional network 6 and/or the fully connected network 8 of the neural network architecture. Again, the controller 30 may also be operable to control the skip connections bus 11, for selectively coupling (and decoupling) the skip connections 13 of the bus 11.

Turning to Figure 2C, the deconvolutional network 6 includes an input for receiving the output of the convolutional network 4. As described in relation to Figure 1, the deconvolutional network 6 may be connected to the convolutional network 4 by a data bus 12. In this embodiment, the input of the deconvolutional network 6 may be formed by a layer connector fabric 90 as shown in Figure 2C which receives the output of the convolutional network 4.

The layers of the deconvolutional network 6 up sample the output of the convolutional network 4 and classify the features extracted from the radar data by the convolutional network 4.

A first layer 61 of deconvolutional network 6 may be a 1x1 convolution layer with K filters. Note that in Figure 2C, K denotes the number of filters supported by the system 100, whereas k denotes the number of filters actually used for a given application.

The deconvolutional network 6 also includes a plurality of hidden layers 84, 86, 88. The hidden layers 84, 86, 88 may be arranged in a linear sequence. The deconvolutional network 6 may in principal include any number of hidden layers - for clarity only the first hidden layer 84, a p^{th} hidden layer 86 and a (final) q^{th} hidden layer 88 are shown in Figure 2C. The hidden layers 84, 86, 88 each include a deconvolution layer 63. As noted above, the deconvolution layers 63 of the hidden layers 84, 86, 88 are operable to classify the features extracted from the radar data by the convolutional network 4.

Each deconvolution layer 63 may comprise a perceptron cube 68, 72, 76. Again, the perceptron cubes 68, 72, 76 shown in the figures outline the envelope of available perceptrons that may be supported by the system 100. On the other hand, the cubes 66, 70, 74 shown in the figures illustrate the perceptrons that may be employed by a given application.

Each deconvolution layer 63 in each hidden layer 84, 86, 88 may be connected to the (e.g. deconvolution layer 63 of the) preceding hidden layer by a layer connector fabric 90. Note that the layer connector fabric 90 of the first hidden layer 84 connects the first deconvolution layer 63 to the first layer 61.

In the figures, u, v, w are all programmable parameters of the deconvolution layers 63 and can be supported up to maximum of U, V and W, respectively.

The deconvolution layer 63 of the first hidden layer 84 is operable to up sample the output of the 1x1 convolution layer (the first layer 61) of deconvolutional network 6. A plurality of hidden layer 84, 86 comprising deconvolution layers 63 may follow the first hidden layer 84. These following layers may be selectively connectable to the skip connections bus 11.

The (q^{th}) deconvolution layer 63 of the final hidden layer in the sequence of hidden layers in the deconvolutional network 6 may have the dimensions ExAx[Dx(C+1)] where C is the number of distinct classes that may be determined by the system 100 for features in the radar data that are extracted by the convolutional network 4.

The deconvolutional network 6 also includes a classification output located at the end of the sequence of hidden layers 84, 86, 88. In the present embodiment the output may be considered to be the output of the deconvolution layer 63 of the final hidden layer 88. The classification output outputs the radar data including classification of the features extracted from the radar data by the convolutional network 4.

Again, Figure 2C shows the skip connections bus 11, in which the arrows 13 schematically show the connections between the skip connections bus 11 and the various layers of the deconvolutional network 6. Note that in this embodiment, there is no skip connection between the skip connections bus 11 and the first hidden layer 84.

Turning to Figure 2B, the fully connected network 8 has an input coupled to the bus 12 for receiving the output of the convolutional network 4. The fully connected network 8 has a plurality of fully connected layers (1, j, j+1, j+2...), which may be arranged in a linear sequence. In the present embodiment, the input may be received by a layer connector fabric 90 located before a first layer of the sequence. Each fully connected layer in the sequence may be coupled to a following/preceding fully connected layer by a layer connector fabric 90. For clarity, Figure 2B shows a subset of the fully connected layers of the fully connected network 8 in this embodiment.

The fully connected layers of the fully connected network 8 may typically have a depth of 1. As before, in Figure 2B, the cubes 94, 98, 102, 106 show the envelope (F) supported by the system for each layer, while the cubes 92, 96, 100, 104 show the parts (f) of the supported envelope that are actually used for a given application.

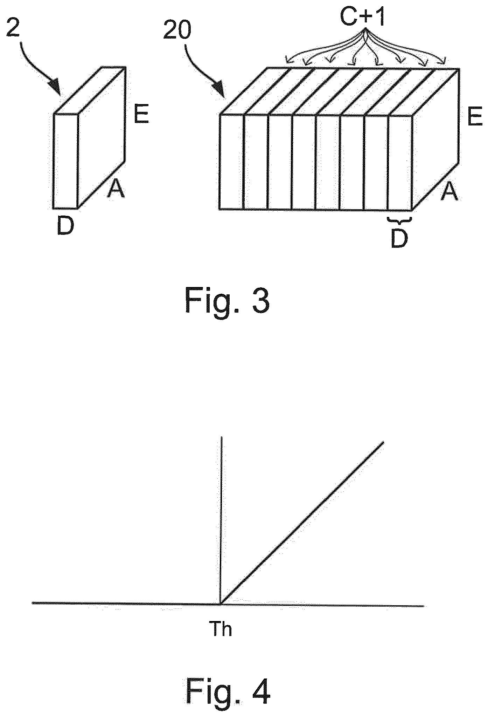

The fully connected network 8 also has an output, which is supplied to the filter 10 by a connection 130. The fully connected network 8 is operable to straighten features learned from the convolutional network 4 and supply a clutter threshold value 110 to output supplied to the filter 10. The clutter threshold value 110 may be a single value, and may comprise a radar cross section value. The clutter threshold value 110 may be denoted Th, and in this embodiment may be calculated in accordance with the Rectified Linear (ReLu) activation function (in particular, the clutter threshold value 110 may form the "zero point" of the ReLu function as shown schematically in Figure 4).

Turning to Figure 2D, the filter 10 may have a filter layer 120 comprising a cube of "biased" Rectified Linear Units (ReLU) with same dimensions ExAx[Dx(C+1)] as output of deconvolutional network 6. As before, in Figure 2D, the cube 114 shows the envelope of supported units (U), while the cube 112 shows the units that are actually used for a given application. Note that the cube of the filter 10 may typically have the same dimensions as the output of the deconvolutional network 6, so that the filter 10 can correctly receive and filter the output of the deconvolutional network 6.

As noted above, the filter 10 receives the clutter threshold value 110 via the connection 130. The filter 10 uses the clutter threshold value 110 to filter the output of the deconvolutional network 6. In this embodiment, where the ReLu function is used as the activation function, the filter 10 outputs zero for any (e.g. RCS) values in the output of the deconvolutional network 6 that fall below the clutter threshold value. On the other hand, the filter returns any value of the output of the deconvolutional network 6 that falls above the clutter threshold value. Collectively, these values, and the zero values (filtered out because the corresponding values in the output from the deconvolutional network 6 fell below the clutter threshold value) form a filtered classification output of the filter 10. The filter 10 is operable to pass this filtered classification output to the output 20 of the system.

The operation of the fully connected network 8 and the filter 10, to calculate the clutter threshold value 110 and applying it in a filtering step may help in a backpropagation stage of training the neural network, where it may improve in the classification of objects of interest against clutter.

Figure 3 compares the dimensions of the input matrix 2 and output 20 of the neural network architecture of Figure 1 according to an embodiment of this disclosure. As mentioned previously, the input matrix 2 may have dimensions ExAxD. The output 20 may be made up of a matrix including C+1 sections, each section having the dimensions ExAxD, whereby the overall dimensions of the output matrix are ExAx[Dx(C+1)]. Here, C is the number of distinct classes that may be determined by the system 100 for features in the radar data that are extracted by the convolutional network 4. Note that the "1" in the term "C+1" denotes an additional class, allocated to unclassified objects.

The layer connector fabrics 90 described herein may be considered to be an abstracted illustration of data-mapping through mathematical operation between two layers of the system 100.

For the convolutional network 4, each layer connector fabric 90 may, for instance:
- connect elements of a convolution layer 47, as input to the operation, to the elements of a next sub-sampling layer 49 (of the same hidden layer 80, 82) as output of the operation, or
- connect or elements of a sub-sampling layer 49, as input of the operation, to the convolutional layer 47 of subsequent hidden layer of convolutional network 4.

In case of a connection between a convolutional layer 47 and its successive sub-sampling layer 49, the layer connector fabric 90 may, for instance, apply a max-pooling, mean-pooling, min-pooling or a similar operation as is known in the art. The choice of operation that is used may be controlled by the controller 30.

In case of a connection between a sub-sampling layer 49 of a preceding hidden layer and convolution layer 47 of a following hidden layer, the layer connector fabric 90 may be a 2-dimensional convolution operation, dropout, flatten (for the last convolutional layer in the sequence), or another similar operation.

For deconvolution layers 63 in the deconvolutional network 6, the layer connector fabric 90 may be an up-sampling operation instead of a sub-sampling operation as in convolutional network 4.

A method of classifying objects using radar data may be performed as follows. This method may be implemented by, for example, the system of Figures 1 and 2.

The method may include obtaining radar data. The radar data may be obtained by a vehicle radar system of a vehicle. The radar data may be received (e.g. from the vehicle radar system) by a convolutional network. The convolutional network may be a convolutional network 4 of the kind described above in relation to Figures 1 and 2. As explained previously, the radar data may be provided to the convolutional network in the form of an input matrix, such as the input matrix 2.

The method may also include the convolutional network using a plurality of hidden layers comprising convolution layers to extract features from the radar data. These features may generally relate and correspond to the objects to be classified by the method.

The method may further include a deconvolutional network (e.g. the deconvolutional network 6 described above in relation to Figures 1 and 2) receiving an output of the convolutional network. The output of the convolutional network generally comprises processed radar data in which extracted features have been identified by the convolutional network. The deconvolutional network may be coupled to the convolutional network by a data bus (e.g. the bus 12).

The method may also include the deconvolutional network using a plurality of hidden layers comprising deconvolution layers to classify the features extracted from the radar data by the convolutional network. The method may further include the deconvolutional network providing a classification output, which may output processed radar data in which the extracted features identified by the convolutional network are classified.

The method may further include a fully connected network receiving the output of the convolutional network (e.g. via the bus 12), and then using a plurality of fully connected layers to determine a clutter threshold value from the output of the convolutional network.

The method may also include a filter using the clutter threshold value to filter noise and/or clutter from the classification output of the deconvolutional network to produce a filtered classification output.

In some embodiments, the method may include selectively coupling a skip connection between the convolutional network and the deconvolutional network for bypassing at least some of the convolution layers and deconvolution layers, as has been explained previously.

The system of Figure 1 may be incorporated into, for example, a hardware accelerator or a graphics processing unit. The hardware accelerator or graphics processing unit may be provided in a vehicle, for instance as part of a vehicle radar system of the vehicle. The vehicle may, for instance, be a road vehicle such as a car, truck, lorry, van or bike.

Accordingly, there has been described a system and method to classify objects using radar data obtained by an automotive radar. The system includes a convolutional network having a plurality of hidden layers comprising convolution layers for extracting features from the radar data, and an output. The system also includes a deconvolutional network having a plurality of hidden layers comprising deconvolution layers for classifying the features extracted from the radar data, and a classification output. The system also includes a filter having an input coupled to the classification output of the deconvolutional network. The system further includes a fully connected network having a plurality of fully connected layers for determining a clutter threshold value from the output of the convolutional network. The filter is operable to use the clutter threshold value to filter noise and/or clutter from the classification output of the deconvolutional network and pass a filtered classification output to an output of the system.

Although particular embodiments of this disclosure have been described, it will be appreciated that many modifications/additions and/or substitutions may be made.

## Claims

1. A system (100) operable to classify objects using radar data obtained by an automotive radar, the system comprising:
a convolutional network (4) comprising:
an input (2) for receiving the radar data;
a plurality of hidden layers (80, 82) comprising convolution layers for extracting features from the radar data;
and an output;
a bus (12) coupled to the output of the convolutional network;
a deconvolutional network (6) comprising:
an input coupled to the bus to receive the output of the convolutional network,
a plurality of hidden layers (84, 86, 88) comprising deconvolution layers for classifying the features extracted from the radar data by the convolutional network; and
a classification output;
a filter (10) having an input coupled to the classification output of the deconvolutional network;
the system being **characterised by**
a fully connected network (8) comprising:
an input coupled to the bus for receiving the output of the convolutional network;
a plurality of fully connected layers for determining a clutter threshold value from the output of the convolutional network; and
an output connected (130) to the filter to provide the clutter threshold value to the filter; and
an output (20) coupled to the filter,
wherein the filter is operable to use the clutter threshold value (110) to filter noise and/or clutter from the classification output of the deconvolutional network and pass a filtered classification output to the output of the system.

2. The system of claim 1 further comprising a skip connections bus (11) having one or more skip connections (13) coupleable between the convolutional network and the deconvolutional network for bypassing some of the convolution layers and deconvolution layers.

3. The system of claim 2, wherein each skip connection allows high-level extracted features learned during early convolution layers of the convolutional network to be passed directly to the deconvolutional network.

4. The system of claim 2 or claim 3, operable selectively to couple/decouple a said skip connection between a said convolution layer and a said deconvolution layer.

5. The system of any preceding claim, wherein the filter is operable to filter out any detected features having a value less than the clutter threshold value.

6. The system of claim 5, wherein the value of each detected feature comprises a radar cross section value.

7. The system of any preceding claim, wherein the clutter threshold value is a single value.

8. The system of any preceding claim comprising a controller (30) for controlling at least one of:
a stride size;
a padding size; and
a dropout ratio,
for each layer in the convolutional and/or deconvolutional network.

9. The system of any preceding claim, wherein the radar data comprises at least one of range, doppler and spatial information.

10. The system of any preceding claim, wherein the filtered classification output classifies objects detected by the automotive radar.

11. A hardware accelerator comprising the system of any preceding claim.

12. A graphics processing unit comprising the system of any of claims 1 to 10.

13. A vehicle comprising the hardware accelerator of claim 11 or the graphics processing unit of claim 12.

14. A method of classifying objects using radar data obtained by an automotive radar, the method comprising:
by a convolutional network (4):
receiving the radar data; and
using a plurality of hidden layers (80, 82) comprising convolution layers to extract features from the radar data;
by a deconvolutional network (6):
receiving an output of the convolutional network;
using a plurality of hidden layers (84, 86, 88) comprising deconvolution layers to classify the features extracted from the radar data by the convolutional network; and
providing a classification output;
the method being **characterised by** the following steps: by a fully connected network (8):
receiving the output of the convolutional network; and
using a plurality of fully connected layers to determine a clutter threshold value (110) from the output of the convolutional network; and
by a filter (10) using the clutter threshold value to filter noise and/or clutter from the classification output of the deconvolutional network to produce a filtered classification output.

15. The method of claim 14 comprising selectively coupling a skip connection (13) between the convolutional network and the deconvolutional network for bypassing some of the convolution layers and deconvolution layers.

## Patentansprüche

1. System (100), das betreibbar ist, Objekte unter Verwendung von Radardaten zu klassifizieren, die durch ein Kraftfahrzeugradar erhalten werden, wobei das System Folgendes umfasst:
ein Faltungsnetz (4), das Folgendes umfasst:
einen Eingang (2) zum Empfangen der Radardaten;
mehrere verborgene Schichten (80, 82), die Faltungsschichten zum Extrahieren von Merkmalen aus den Radardaten umfassen; und
einen Ausgang;
einen Bus (12), der an den Ausgang des Faltungsnetzes gekoppelt ist;
ein Entfaltungsnetz (6), das Folgendes umfasst:
einen Eingang, der an den Bus gekoppelt ist, um die Ausgabe des Faltungsnetzes zu empfangen,
mehrere verborgene Schichten (84, 86, 88), die Entfaltungsschichten zum Klassifizieren der Merkmale umfassen, die durch das Faltungsnetz aus den Radardaten extrahiert wurden; und
einen Klassifizierungsausgang; und
ein Filter (10), das einen Eingang aufweist, der an den Klassifizierungsausgang des Entfaltungsnetzes gekoppelt ist; wobei
das System **gekennzeichnet ist durch**
ein vollständig verbundenes Netz (8), das Folgendes umfasst:
einen Eingang, der zum Empfangen der Ausgabe des Faltungsnetzes an den Bus gekoppelt ist;
mehrere vollständig verbundene Schichten zum Bestimmen eines Unordnungsschwellenwerts aus der Ausgabe des Faltungsnetzes; und
einen Ausgang, der mit dem Filter verbunden ist (130), um den Unordnungsschwellenwert für das Filter bereitzustellen; und
einen Ausgang (20), der an das Filter gekoppelt ist,
wobei das Filter betreibbar ist, den Unordnungsschwellenwert (110) zu verwenden, um ein Rauschen und/oder eine Unordnung aus der Klassifizierungsausgabe des Entfaltungsnetzes zu filtern, und eine gefilterte Klassifizierungsausgabe zum Ausgang des Systems weiterzuleiten.

2. System nach Anspruch 1, das ferner einen Sprungverbindungsbus (11) umfasst, der eine oder mehrere Sprungverbindungen (13) aufweist, die zum Umgehen eines Teils der Faltungsschichten und der Entfaltungsschichten zwischen dem Faltungsnetz und dem Entfaltungsnetz koppelbar sind.

3. System nach Anspruch 2, wobei jede Sprungverbindung ermöglicht, dass hochrangige extrahierte Merkmale, die während früher Faltungsschichten des Faltungsnetzes gelernt wurden, zum Entfaltungsnetz direkt weitergeleitet werden.

4. System nach Anspruch 2 oder Anspruch 3, das wahlweise betreibbar ist, eine Sprungverbindung zwischen einer Faltungsschicht und einer Entfaltungsschicht zu koppeln/zu entkoppeln.

5. System nach einem vorhergehenden Anspruch, wobei das Filter betreibbar ist, beliebige detektierte Merkmale herauszufiltern, die einen Wert aufweisen, der geringer als der Unordnungsschwellenwert ist.

6. System nach Anspruch 5, wobei der Wert jedes detektierten Merkmals einen Radarquerschnittwert umfasst.

7. System nach einem vorhergehenden Anspruch, wobei der Unordnungsschwellenwert ein einzelner Wert ist.

8. System nach einem vorhergehenden Anspruch, das eine Steuereinheit (30) zum Steuern mindestens eines von Folgendem umfasst:
eine Schrittgröße;
eine Auffüllgröße; und
ein Ausfallverhältnis,
für jede Schicht in dem Faltungsnetz und/oder dem Entfaltungsnetz.

9. System nach einem vorhergehenden Anspruch, wobei die Radardaten mindestens eines von Reichweiteninformationen, Dopplerinformationen und räumlichen Informationen umfassen.

10. System nach einem vorhergehenden Anspruch, wobei die gefilterte Klassifizierungsausgabe Objekte klassifiziert, die durch das Kraftfahrzeugradar detektiert werden.

11. Hardware-Beschleuniger, der das System nach einem vorhergehenden Anspruch umfasst.

12. Grafikverarbeitungseinheit, die das System nach einem der Ansprüche 1 bis 10 umfasst.

13. Fahrzeug, das den Hardware-Beschleuniger nach Anspruch 11 oder die Grafikverarbeitungseinheit nach Anspruch 12 umfasst.

14. Verfahren zum Klassifizieren von Objekten unter Verwendung von Radardaten, die durch ein Kraftfahrzeugradar erhalten werden, wobei das Verfahren Folgendes umfasst:
durch ein Faltungsnetz (4):
Empfangen der Radardaten und
Verwenden von mehreren verborgenen Schichten (80, 82), die Faltungsschichten umfassen, um Merkmale aus den Radardaten zu extrahieren;
durch ein Entfaltungsnetz (6):
Empfangen einer Ausgabe des Faltungsnetzes;
Verwenden von mehreren verborgenen Schichten (84, 86, 88), die Entfaltungsschichten umfassen, um die Merkmale zu klassifizieren, die durch das Faltungsnetz aus den Radardaten extrahiert werden; und
Bereitstellen einer Klassifizierungsausgabe; wobei
das Verfahren **gekennzeichnet ist durch** die folgenden Schritte: durch ein vollständig verbundenes Netz (8):
Empfangen der Ausgabe des Faltungsnetzes und
Verwenden von mehreren vollständig verbundenen Schichten, um einen Unordnungsschwellenwert (110) aus der Ausgabe des Faltungsnetzes zu bestimmen; und
durch ein Filter (10) Verwenden des Unordnungsschwellenwerts, um ein Rauschen und/oder eine Unordnung aus der Klassifizierungsausgabe des Entfaltungsnetzes zu filtern, um eine gefilterte Klassifizierungsausgabe zu erzeugen.

15. Verfahren nach Anspruch 14, das ein wahlweises Koppeln einer Sprungverbindung (13) zwischen dem Faltungsnetz und dem Entfaltungsnetz zum Umgehen eines Teils der Faltungsschichten und der Entfaltungsschichten umfasst.

## Revendications

1. Système (100) apte à fonctionner pour classer des objets en utilisant des données radar obtenues par un radar automobile, le système comprenant :
un réseau convolutif (4) comprenant :
une entrée (2) pour recevoir les données radar ;
une pluralité de couches cachées (80, 82) comprenant des couches de convolution pour extraire des caractéristiques des données radar ;
et une sortie ;
un bus (12) relié à la sortie du réseau convolutif ;
un réseau déconvolutif (6) comprenant :
une entrée reliée au bus pour recevoir la sortie du réseau convolutif,
une pluralité de couches cachées (84, 86, 88) comprenant des couches de déconvolution pour classer les caractéristiques extraites des données radar par le réseau convolutif ; et
une sortie de classification ;
un filtre (10) ayant une entrée reliée à la sortie de classification du réseau de déconvolution ;
le système étant **caractérisé par**
un réseau entièrement connecté (8) comprenant :
une entrée reliée au bus pour recevoir la sortie du réseau convolutif ;
une pluralité de couches entièrement connectées pour déterminer une valeur de seuil d'encombrement à partir de la sortie du réseau convolutif ; et
une sortie (130) connectée au filtre pour fournir au filtre la valeur seuil d'encombrement ; et
une sortie (20) reliée au filtre,
le filtre étant apte à fonctionner de façon à utiliser la valeur seuil d'encombrement (110) afin de filtrer le bruit et/ou l'encombrement provenant de la sortie de classification du réseau de déconvolution et de transmettre à la sortie du système une sortie de classification filtrée.

2. Système selon la revendication 1, comprenant en outre un bus (11) à connexions de saut comportant une ou plusieurs connexions de saut (13) aptes à être reliées entre le réseau convolutif et le réseau déconvolutif pour contourner certaines des couches de convolution et des couches de déconvolution.

3. Système selon la revendication 2, dans lequel chaque connexion de saut permet aux caractéristiques extraites de haut niveau apprises pendant les premières couches de convolution du réseau convolutif d'être transmises directement au réseau déconvolutif.

4. Système selon la revendication 2 ou la revendication 3, apte à fonctionner de manière sélective pour coupler/découpler une dite connexion de saut entre une dite couche de convolution et une dite couche de déconvolution.

5. Système selon l'une quelconque des revendications précédentes, dans lequel le filtre est apte à fonctionner de façon à filtrer toutes les caractéristiques détectées ayant une valeur inférieure à la valeur seuil d'encombrement.

6. Système selon la revendication 5, dans lequel la valeur de chaque caractéristique détectée comprend une valeur de section efficace radar.

7. Système selon l'une quelconque des revendications précédentes, dans lequel la valeur seuil d'encombrement est une valeur unique.

8. Système selon l'une quelconque des revendications précédentes, comprenant un dispositif de commande (30) pour commander au moins un parmi ce qui suit :
une taille de pas ;
une taille de remplissage ; et
un taux d'abandon,
pour chaque couche dans le réseau de convolution et/ou de déconvolution.

9. Système selon l'une quelconque des revendications précédentes, dans lequel les données radar comprennent au moins un parmi ce qui suit : distance, doppler et informations spatiales.

10. Système selon l'une quelconque des revendications précédentes, dans lequel la sortie de classification filtrée classe les objets détectés par le radar automobile.

11. Accélérateur matériel comprenant le système selon l'une quelconque des revendications précédentes.

12. Unité de traitement graphique comprenant le système selon l'une quelconque des revendications 1 à 10.

13. Véhicule comprenant l'accélérateur matériel selon la revendication 11 ou l'unité de traitement graphique selon la revendication 12.

14. Procédé de classification d'objets en utilisant des données radar obtenues par un radar automobile, le procédé comprenant :
par un réseau convolutif (4) :
le fait de recevoir des données radar ; et
le fait d'utiliser une pluralité de couches cachées (80, 82) comprenant des couches de convolution pour extraire des caractéristiques à partir des données radar ;
par un réseau déconvolutif (6) :
le fait de recevoir une sortie du réseau convolutif ;
le fait d'utiliser une pluralité de couches cachées (84, 86, 88) comprenant des couches de déconvolution pour classer les caractéristiques extraites des données radar par le réseau convolutif ; et
le fait de fournir une sortie de classification ;
le procédé étant **caractérisé par** les étapes suivantes :
par un réseau entièrement connecté (8) :
le fait de recevoir la sortie du réseau convolutif ; et
le fait d'utiliser une pluralité de couches entièrement connectées pour déterminer une valeur seuil d'encombrement (110) à partir de la sortie du réseau convolutif ; et
par un filtre (10), le fait d'utiliser la valeur seuil d'encombrement afin de filtrer le bruit et/ou l'encombrement provenant de la sortie de classification du réseau de déconvolution pour produire une sortie de classification filtrée.

15. Procédé selon la revendication 14, comprenant le fait de relier sélectivement une connexion de saut (13) entre le réseau convolutif et le réseau déconvolutif pour contourner certaines des couches de convolution et des couches de déconvolution.
